# EUROPEAN PATENT SPECIFICATION

(11) **EP 0 666 020 B1**
(45) Date of publication and mention of the grant of the patent: **13.08.1997**
(21) Application number: 94500016.4
(22) Date of filing: 04.02.1994
(51) Int. Cl.: A01D 46/26

(54) **Vibrating unit for fruit trees**
Vibrationseinheit für Fruchtbäume
Unité de vibration pour des arbres fruitiers

(43) Date of publication of application: 09.08.1995
(73) Proprietor: Cadena Ramon, Juan, E-25001 Lleida (ES)
(72) Inventor: Cadena Ramon, Juan, E-25001 Lleida (ES)
(74) Representative: Alonso Langle, Emilio

(56) References cited:
- FR-A- 1 585 828
- GB-A- 1 301 855
- GB-A- 2 017 863

## Description

### OBJECT OF THE INVENTION

The inventions refers to a vibrating unit for fruit trees, especially designed to shake trunks where the fruit is ripe enough to fall off with the vibrations. The fruit must be of the type that do get damaged when falling, for example olives, hazelnuts, almonds, etc.

The design of this vibrating unit permits to regulate the speed and the mass of vibration, so that the exact amount of vibration can be applied in each moment in a circular sense around the trunk.

### BACKGROUND OF THE INVENTION

Up to now there is not any vibrating device for fruit trees known that offers an adjustable resultant which goes round the trunk describing a circular orbit, and the possibility to regulate the mass of vibration from zero to maximum progressively.

In the existing document of Patent US 4409782, it is said that certain operative conditions can be altered suddenly, producing a sudden change in the vibration intensity as a consequence of the operation of other engines connected to wheels joined by belts to the eccentrics, these being arranged freely on the vibration axis.

With this device it is possible to obtain a uniform regulation of the range of the vibration, because it has only three of four positions that define other vibration conditions.

On the other hand, the document GB2017863 presents a vibrating device which regulates the range of the vibration produced by eccentric masses through the modification of the phase of these masses by means of any of the three mechanisms that this device can incorporate. Two of these mechanisms are based on the angular displacement of one of the shafts joined to some of the counterweights; the other mechanism is based on the axial displacement of gears along a shaft with spiral grooves. The counterweights are fixed to four shafts parallel two against two, these shafts being joined to the support structure that transmits the vibration. This arrangement constitutes a very heavy unit difficult to carry and lacks the precise structure to adapt to a tree, used at present for other industrial applications.

The practice has demonstrated that it is essential to take into account the size, type and even variety of the tree.

It has also become evident that the trees which produce table olives, for example, cannot be vibrated the same way as those trees which produce olives to be pressed in order to obtain oil. It is also necessary to carry out a special vibration on those trees which produce small olives, since the mass of these olives is much smaller than the olives used for oil.

It is even more evident that a special frequency of vibration is needed for other kinds of trees, like hazel trees or almond trees, since the trunk can get damaged and the fruit does not fall completely even at the maximum speed.

It remains clear from the literature of Patents that the problems found when large zones of trees have to be shaken in order to obtain the fruit have not been resolved yet.

### DESCRIPTION OF THE INVENTION.

The invention proposed provides a solution for these problems, offering a vibrating unit for trees that can be regulated both in speed and mass of vibration, without stops between "zero" and "maximum", applying the necessary vibration in each case. Other outstanding characteristic of this invention is that the masses that generate the vibration cross at points situated constantly inside a circular orbit in progressive variation, so that the tree is shaken in all directions, making the fruit fall easily without damaging the tree structure and without using large vibration masses with a minimum time of vibration.

The regulation of the parameters can be reached because the masses of the counterweights that control the vibration can be added or taken away by the operator, so that if the masses of the counterweights are added they provide the maximum, while if they are taken away they will counterweigh dynamically.

The vibrating unit of the invention presents the peculiarity that the masses corresponding to the counterweights are arranged in couples with opposite directions and receive the differentiating effect from a differential element operated mechanic or hydraulically.

Therefore, one of the new characteristics of this vibrating unit is that while the input shaft or conducting shaft rotates at a certain speed, the output shaft can rotate at a different speed so that the counterweights, since they rotate in opposite directions, remain diametrically in balance (resultant 0), or in the same position by the differentiating effect, thus providing the sum of their masses and the maximum vibration.

Obviously, the speed of the vibration depends on the faster or slower rotation of the operating engine.

The speed selector means consist of a conventional differential, the frame of which is provided with a ring gear connected to an hydraulic or mechanic operating rack, which allows to introduce from the exterior a differential variant which will determine the mass of vibration used.

The speed selector means consist of a rotating frame joined to the motive shaft, inside of which there is a chamber in which a hydraulic plunger moves joined to the driven shaft. This plunger has a screwed section that moves inside an screwed section of the inner chamber, producing a difference between the speed of the input shaft and the output shaft.

### DESCRIPTION OF THE DRAWINGS.

In order to complete the description of the invention and to provide a clearer explanation of the characteristics of the invention, three sheets of drawings are attached to this document which represent with an illustrative and not limitative purpose:

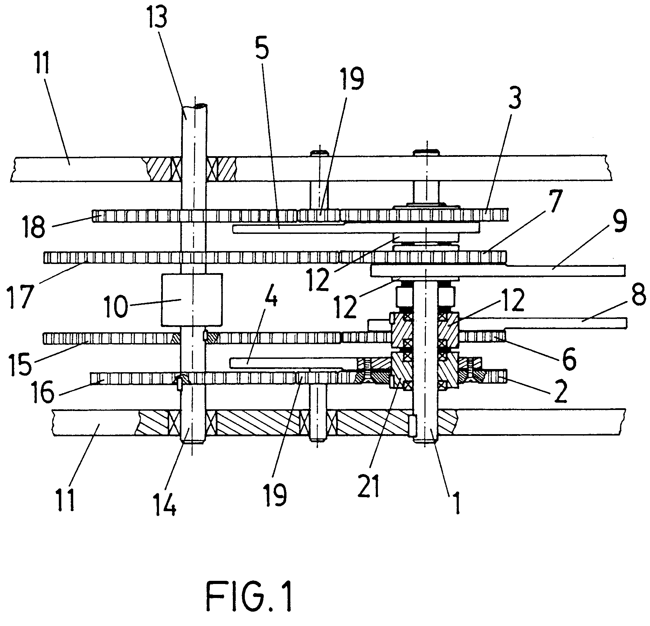

Figure 1: A section of the elevation of the vibrating unit according to the object of the invention.
Figure 2: A longitudinal section of a speed selector device with hydraulic operation.
Figure 3: A detail showing a differential unit with hydraulic and mechanic operation combined in order to obtain a variation of speed between the input motive shaft and the output driven shaft.

### PREFERABLE WAY OF REALIZATON OF THE INVENTION.

In view of the mentioned Figures, it can be seen that the vibrating unit for fruit trees consists of a base fixed shaft (1) around which rotate a pair of toothed wheels (2,3) bearing two counterweights (4,5), in the same direction, while another pair of toothed wheels (6,7) rotate in the opposite direction bearing two counterweights (8,9). The pair of toothed wheels 2-6 is connected by mechanic means to a speed selector (10).

The rotation of the toothed wheels (2,3,6,7) when the speed selector (10) is not operating takes place so that the toothed wheels (2) and (6) rotate at the same speed than (3) and (7) respectively. During the movement, counterweights (4,8,9,5) joined to the toothed wheels (2,6,7,3) rotate crossing at variable points inside a circular orbit. Thanks to this, the tree is shaken in all directions, making the fruit fall easily.

The fixed shaft (1) is mounted on an underframe (11) that transmits the vibration to the fruit tree. The intensity depends on the counterweights (4,8, 9,5) joined to the toothed wheels (2,6,7,3) around the fixed shaft (1). Each of the units formed by a counterweight and a gear rotates freely in a bush (12) around a fixed shaft (1).The bushes (12) are separated by distancing elements.

The speed selector device (10) is joined to two half-shafts, one motive (13) connected to the engine and another driven (14). Over the half-shaft (13) are two toothed wheels (17) and (18) which engage over the toothed wheels (7) and (3) mounted on the fixed shaft (1). On the other hand, on the driven half-shaft (14) there are two toothed wheels (15) and (16) joined to wheels (2) and (6).

Wheels (16) and (18) rotate in the same direction as wheels (2) and (3), since they are operated by an intermediate reverser gear-wheel (19). The relation of transmission of pair (15,6) is the same as pair (17,7).

Thanks to the action of the speed selector device (10) a change of speed can be obtained between motive shaft (13) and driven shaft (14), so that the toothed wheels (15) and (16) will change their speed instantaneously and as a result wheels (6) and (2) will change their speed producing a different phase in the counterweights. The speed selector (10) permits a regulation of the intensity of the vibration from a minimum to a maximum depending on the different positions of the counterweights (4,8,9,5) in each moment.

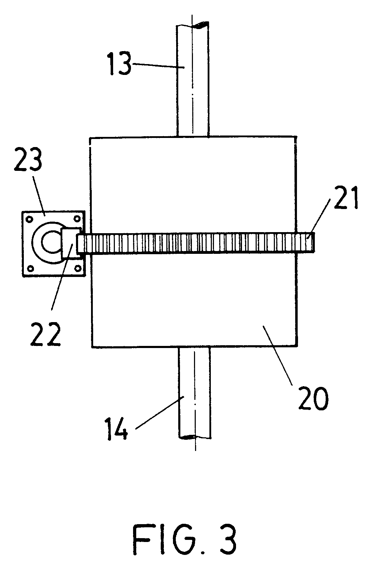

The speed selector (10) shown by Figure 3 comprises a rotating frame (20) with a ring gear (21) connected to a rack (22) of hydraulic or mechanic operation, so that when the rack (22) is operated the ring gear (21) rotates and depending to the position of the gears arranged inside the frame, the speed of the driven shaft (14) changes.

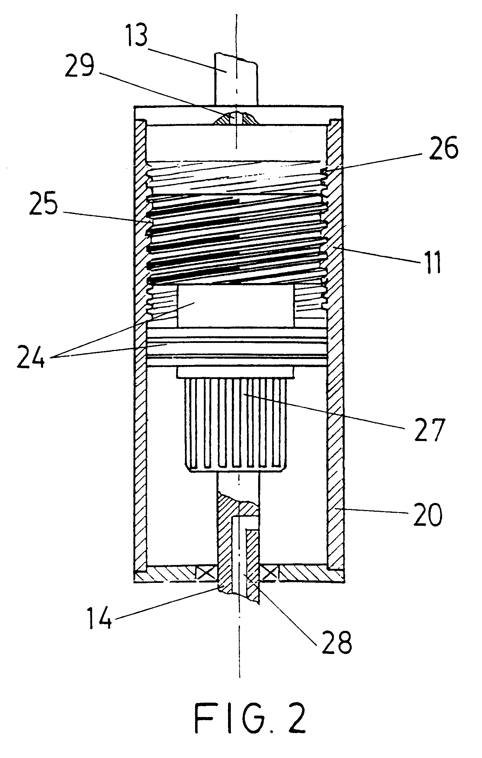

Another way of variation of speed proposed in this invention is shown in Figure 2, which comprises a rotating frame (20) joined to the motive shaft (13), inside of which there is chamber in which a hydraulic cylinder (24) with a screwed section (25) that engages in a screw (26) in the inner chamber moves. At the same time this plunger moves on a screw (27) joined to driven shaft (14).

The hydraulic oil is introduced through passages (28) and (29) in shafts (14) and (13), so that the plunger (24) moves inside the chamber, making the screw (25) and the frame (20) rotate, increasing or decreasing the speed of the driven shaft (14) in relation to shaft (13).

It is not considered necessary to make any further explanation of the invention so that any expert in the matter can understand its importance and put into practice an effective realization.

## Claims

1. Vibrating unit for trees, which constitutes a mechanism to produce a vibration in the trunk of fruit trees and make the fruit fall, of the type that incorporates a frame that transmits the vibration to the fruit tree, characterized in that it consists of a fixed shaft (1) around which at least one first pair of toothed wheels (2, 3) bearing counterweights (4, 5) rotates in one direction and a second pair of toothed wheels (6, 7) bearing counterweights (8, 9) with the same mass as the first ones rotates in an opposite direction, whereby one toothed wheels (2, 6) of each of said first and second pair of toothed wheels is connected to a speed selector (10), so that the position of the counterweighths (4, 5, 8, 9) changes depending on the actuation of said speed selector (10) and the counterweights (4, 5, 8, 9) cross at variable points inside a circular orbit.

2. Vibrating unit for trees, according to the previous claim, characterized in that the toothed wheels (2, 3, 6, 7) and the counterweights (4, 5, 8, 9) are arranged around the fixed shaft (1) which is fixed to underframe (11), each toothed wheel (2, 3, 6, 7) joined to a counterweight, forming a set that rotates freely in a bush (12) around the fixed shaft (1).

3. Vibrating unit for trees, according to the previous claims, characterized in that the speeed selector (10) consists of two half-shafts, each half shaft (13, 14) acting via a pair of toothed wheels (17, 18 and 15, 16) on each of the toothed wheels of said first and second pair.

4. Vibrating unit for trees, according to the previous claims, characterized in that one toothed wheel (16) of the driven shaft (14) and other toothed wheel (18) of the motive shaft (13) incorporate an intermediate reverse gear-wheel (19), while the other pair of toothed wheels (15, 17) are different in diameter to one another and to the previous pair.

5. Vibrating unit for fruit trees, according to claims 1 and 3, characterized in that the speed selector (10) comprises a conventional differential consisting of a frame (20) with a ring gear (21) connected to a rack (22) operated by hidraulic or mechanic means (23).

6. Vibrating unit for fruit trees, according to claims 1 and 3, characterized in that the speed selector (10) comprises a rotating frame (20) joined to the motive shaft (13) inside of which there is a chamber in which a hidraulic plunger (24) moves along a screw (27) joined to the driven shaft (14), this plunger (24) provided with a screwed section (25) that engages in a screwed section (26) of the inner chamber.

## Patentansprüche

1. Schütteleinheit für Bäume, die einen Mechanismus zur Erzeugung einer Vibration am Stamm von Obstbäumen darstellt, um das Herunterfallen des Obstes zu bewirken, beinhaltend einen Rahmen, der die Vibration auf den Obstbaum überträgt, dadurch gekennzeichnet, dass sie über eine feste Achse (1) verfügt, um die sich wenigstens ein erstes mit Gegengewichten (4, 5) versehenes Zahnradpaar (2, 3) in einer Richtung dreht, während ein zweites mit Gegegengewichten (8, 9) versehenes Zahnradpaar (6, 7) mit der gleichen Masse wie das erste sich in der entgegengesetzten Richtung dreht, und dass jeweils eines der Zahnräder (2, 6) der genannten ersten und zweiten Zahnradpaare mit einer Geschwindigkeitsswähleinrichtung (10) verbunden ist, um eine Lageänderung der Gegengewichte (4, 5, 8, 9) je nach der Tätigkeit der genannten Geschwindigkeitswähleinrichtung (10) und ein Überschneiden der Gegengewichte (4, 5, 8, 9) an innerhalb der Kreisbahn variierenden Stellen zu bewirken.

2. Schütteleinheit für Bäume gemäss dem vorangehenden Anspruch, dadurch gekennzeichnet, dass die Zahnräder (2, 3, 6, 7) und die Gegengewichte (4, 5, 8, 9) um die feste Achse (1) angeordnet sind, die am unteren Rahmen (11) befestigt ist, wobei jedes Zahnrad (2, 3, 6, 7) mit einem Gegengewicht verbunden ist unter Ausbildung einer Gesamtheit, die sich in einer Hülse (12) frei um die feste Achse (1) dreht.

3. Schütteleinheit für Bäume gemäss den vorangehenden Ansprüchen, dadurch gekennzeichnet, dass die Geschwindigkeitswähleinrichtung (10) über zwei Halbachsen verfügt, wobei jede Halbachse (13, 14) über ein Zahnradpaar (17, 18 und 15, 16) tätig ist, d.h. über die jeweiligen Zahnräder des ersten und des zweiten Paares.

4. Schütteleinheit für Bäume nach einem der vorangehenden Ansprüche, dadurch gekennzeichnet, dass ein Zahnrad (16) der angetriebenen Achse (14) und ein weiteres Zahnrad (18) der Antriebsachse (13) über ein dazwischenliegendes umgekehrtes Ritzel (19) verfügen, und dass die Zahnräder (15, 17) des anderen Zahnradpaares sowohl untereinander als auch vom ersten Paar verschiedene Durchmesser aufweisen.

5. Schütteleinheit für Bäume gemäss den Ansprüchen 1 und 3, dadurch gekennzeichnet, dass die Geschwindigkeitswähleinrichtung (10) ein herkömmliches Ausgleichsgetriebe umfasst, das aus einem Rahmen (20) mit einem mit einer Zahnstange (22) verbundenem, über ein hydraulisches oder mechanisches Mittel (23) angetriebenem Zahnkranz (21) besteht.

6. Schütteleinheit für Bäume nach einem der Ansprüche 1 und 3, dadurch gekennzeichnet, dass die Geschwindigkeitswähleinrichtung (10) einen mit der Antriebsachse (13) verbundenen Drehrahmen (20) aufweist, in welchem sich ein Raum befindet, in dem sich ein hydraulischer Taster (24) entlang einer mit der angetriebenen Achse (14) verbundenen Schnecke (27) bewegt, wobei der genannte Taster (24) mit einem Gewindeabschnitt (25) versehen ist, der an einen Gewindeabschnitt (26) des Innenraumes gekoppelt ist.

## Revendications

1. Unité de vibration pour arbres fruitiers constituée d'un mécanisme produisant une vibration sur le tronc des arbres fruitiers et faisant tomber les fruits, du type intégrant un bâti qui transmet la vibration sur l'arbre fruitier, se caractérisant en ce qu'elle comprend un axe fixe (1) autour duquel quemoins une première paire de roues dentées (2, 3) pourvues de contre-poids (4, 5) tourne dans un sens, et une seconde paire de roues dentées (6, 7) pourvues de contre-poids (8, 9) et de la même masse que les premières tourne dans le sens opposé, selon quoi l'une des roues dentées (2, 6) de chacune de ces première et seconde paires de roues dentées est reliée à un sélecteur de vitesse (10), en faisant que la position des contre-poids (4, 5, 8, 9) change selon l'action de ce sélecteur de vitesse (10) et en ce que les contre-poids (4, 5, 8, 9) se croisent en des points qui varient au sein d'une orbite circulaire.

2. Unité de vibration d'arbres, selon la revendication précédente, se caractérisant en ce que les roues dentées (2, 3, 6, 7) et les contre-poids (4, 5, 8, 9) sont disposés autour de l'axe fixe (1) qui se trouve adhéré au bâti inférieur (11), la roue dentée (2, 3, 6, 7) étant unie à un contre-poids pour former un ensemble qui tourne librement dans une douille (12) autour de l'axe fixe (1).

3. Unité de vibration d'arbres, selon l'une des revendications précédentes, se caractérisant en ce que le sélecteur de vitesse (10) comprend deux demi-axes, chaque demi-axe (13, 14) agissant à travers une paire de roues dentées (17, 18 et 15, 16), c'est à dire les roues dentées de chaque première et seconde paire.

4. Unité de vibration d'arbres, selon les revendications précédentes, se caractérisant en ce qu'une roue dentée (16) de l'axe actionné (14) et une autre roue dentée (18) de l'axe moteur (13) incorporent un pignon inverti intermédiaire (19), tandis que les roues de l'autre paire de roues dentées (15, 17) sont de diamètres différents entre eux et par rapport à la paire précédente.

5. Unité de vibration d'arbres fruitiers, selon les revendications 1 et 3, se caractérisant en ce que le sélecteur de vitesse (10) comprend un différentiel conventionnel qui comprend un bâti (20) ayant une couronne dentée (21) reliée à une crémaillère (22) activée par un moyen hydraulique ou mécanique (23).

6. Unité de vibration d'arbres fruitiers, selon les revendications 1 et 3, se caractérisant en ce que le sélecteur de vitesse (19) comprend un bâti pivotant (20) solidaire de l'axe moteur (13) et à l'intérieur duquel se trouve une chambre dans laquelle un pousseur hydraulique (24) se déplace le long d'une vis sans fin (27) solidaire de l'axe actionné (14), ce pousseur ayant une section filetée (25) qui s'accouple à une section filetée (26) de la chambre intérieure.
